# EUROPÄISCHE PATENTSCHRIFT

(11) **EP 2 611 652 B1**
(45) Veröffentlichungstag und Bekanntmachung des Hinweises auf die Patenterteilung: **05.11.2014**
(21) Anmeldenummer: 11767370.7
(22) Anmeldetag: 29.08.2011
(51) Int. Cl.: B60N 2/48

(54) **KOPFSTÜTZE MIT ZWEI FLÜGELELEMENTEN**
HEAD RESTRAINT WITH TWO WING ELEMENTS
APPUIE-TÊTE DOTÉ DE DEUX ÉLÉMENTS AILETTES

(30) Priorität: 02.09.2010 DE 102010044246
(43) Veröffentlichungstag der Anmeldung: 10.07.2013
(73) Patentinhaber: Johnson Controls GmbH, 51399 Burscheid (DE)
(72) Erfinder: NAVARRO, Daniel, F-67500 Haguenau (FR); BRAUN, Robert, F-67150 Daubensand (FR); DILLINGER, Thomas, 42929 Wermelskirchen (DE)
(74) Vertreter: Wolff, Felix
(86) Internationale Anmeldenummer: PCT/EP2011/004316
(87) Internationale Veröffentlichungsnummer: WO 2012/028284

(56) Entgegenhaltungen:
- EP-A2- 0 152 867
- DE-A1- 2 312 050
- DE-U1- 29 707 759
- GB-A- 191 007 517

## Beschreibung

Die vorliegende Erfindung betrifft eine Kopfstütze mit einem Basiselement, an dem zwei Flügelelemente mittels mindestens einem Scharnier um eine vertikal vorgesehene Achse drehbar gelagert sind, wobei das Scharnier einen Zapfen und eine Ausnehmung aufweist.

Kopfstützen sind aus dem Stand der Technik beispielsweise der gattungsbildenden EP 0152867 A2 bekannt. Kopfstützen mit einem Basiselement, an dem zwei Flügelelemente drehbar gelagert sind, kennt der Fachmann aus der DE 10196653 B4 sowie der WO 95/09742 A1. Die aus dem Stand der Technik bekannten Kopfstützen haben jedoch den Nachteil, dass sie vergleichsweise kompliziert aufgebaut und somit relativ schwierig zu montieren sind.

Es war deshalb die Aufgabe der vorliegenden Erfindung eine Kopfstütze zur Verfügung zu stellen, die die Nachteile des Standes der Technik nicht aufweist.

Gelöst wird die Aufgabe mit einer Kopfstütze mit den kennzeichnenden Merkmalen des Anspruchs 1. Dabei sind der Zapfen und die Ausnehmung kegelstumpfförmig vorgesehen, wobei der Zapfen einen Axialanschlag aufweist, der als Schnappverbindung vorgesehen ist, wobei eine Tragstruktur jedes Flügelelementes zweiteilig vorgesehen ist und die zwei Teile der Tragstruktur zusammengesteckt sind.

Die vorliegende Erfindung betrifft eine Kopfstütze, die in der Regel an der Rückenlehne eines Kraftfahrzeugsitzes angeordnet ist. Dieser Kraftfahrzeugsitz kann einer oder mehreren Personen Platz bieten. Es kann sich bei dem Kraftfahrzeugsitz folglich auch um eine Sitzbank handeln. Vorzugsweise ist die Kopfstütze höhen- und/oder in ihrer Neigung verstellbar, um an die Körpergröße des jeweiligen Sitzinsassen angepasst werden zu können.

Erfindungsgemäß besteht die Kopfstütze aus einem Basiselement, an dem vorzugsweise mindestens eine Haltestange angeordnet ist, mittels derer das Basiselement an der Rückenlehne befestigt ist. An diesem Basiselement sind rechts und links zwei Flügelelemente mittels Scharnieren angebracht. Dadurch können die Flügelelemente um eine vertikale, d. h. parallel zur Rückenlehne verlaufende, Achse verschwenkt und somit zum bzw. vom Kopf des Sitzinsassen bewegt werden, wodurch die Stabilität des Kopfes des Sitzinsassen, wenn er diesen an die Kopfstütze anlegt, erhöht werden kann. Die Flügelelemente können auch in eine Verstaustellung, in der sie an dem Basiselement anliegen, verschwenkt werden.

Erfindungsgemäß weist das Scharnier nun eine Ausnehmung auf, die einen Zapfen aufnimmt, wobei sowohl der Zapfen als auch die Ausnehmung kegelstumpfförmig vorgesehen sind. Dadurch ist der Zapfen nicht nur radial sondern auch axial zumindest in eine Raumrichtung geführt.

Vorzugsweise sind pro Flügelelement 2 Scharniere vorgesehen, die besonders bevorzugt fluchtend zueinander angeordnet sind. Vorzugsweise sind die Scharniere im Wesentlichen identisch aufgebaut und ganz besonders bevorzugt spiegelsymmetrisch zueinander vorgesehen.

Erfindungsgemäß weist der Zapfen einen Axialanschlag auf, mit dem verhindert wird, dass sich der Zapfen selbsttätig aus der Ausnehmung löst.

Vorzugsweise besteht zwischen dem Zapfen und der Ausnehmung eine hinreichend große Reibung, mit der erreicht wird, dass sich die Flügelelemente zumindest bei normalen Gebrauchskräften nicht selbsttätig verstellen. Dies kann beispielsweise dadurch erzielt werden, dass der Außendurchmesser des Zapfens größer als der Innendurchmesser der Ausnehmung vorgesehen ist und/oder dass der Zapfen in die Ausnehmung hineingedrückt oder hineingezogen wird.

In einer weiteren bevorzugten Ausführungsform weist die Kopfstütze einen Radialanschlag auf, mit dem verhindert wird, dass sich die Flügelelemente um ein bestimmtes Maß hinaus verdrehen. Dieser Anschlag kann insbesondere bei einer Unfallsituation von Bedeutung sein um zu verhindern, dass sich die Flügelelemente zu weit vom Kopf des Insassen wegbewegen. Mit dem Anschlag kann aber auch eine sonstige Verletzung eines Fahrzeuginsassen vermieden werden.

Die Flügelelemente können in einer Vielzahl von Positionen relativ zu dem Basiselement eingestellt werden. Beispielsweise können die Flügelelemente auch in eine Verstauposition verbracht werden, in der sie parallel zu dem Basiselement insbesondere an diesem anliegend angeordnet sind.

Erfindungsgemäß weist jedes Flügelelement eine Tragstruktur auf, die zweiteilig vorgesehen ist. Diese beiden Teile werden bei der Montage des Flügelelementes an dem Basiselement zusammengesteckt. Erfindungsgemäß erfolgt das Zusammenstecken während oder nachdem der Zapfen des Flügelelementes in die Ausnehmung des Basiselementes eingeführt wird.

Vorzugsweise weist die Kopfstütze ein Sicherungsmittel auf, mit dem der Verbund der beiden Teile des Flügelelementes gesichert wird, nachdem diese zusammengesteckt worden sind.

Ein weiterer Gegenstand der vorliegenden Erfindung ist ein durch die Merkmale des unabhängigen Anspruchs 4 definiertes Verfahren zur Montage eines Flügelelementes der o.g., erfindungsgemäßen Kopfstütze.

Das erfindungsgemäße Verfahren hat den Vorteil, dass die Flügelelemente sehr einfach an dem Basiselement befestigt werden können.

Im Folgenden wird die Erfindung anhand der Figuren 1 bis 3 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
**Figur 1** zeigt die erfindungsgemäße Kopfstütze.
**Figur 2** zeigt Details des Flügelelementes der erfindungsgemäßen Kopfstütze.
**Figur 3** zeigt Details des Scharniers der erfindungsgemäßen Kopfstütze.

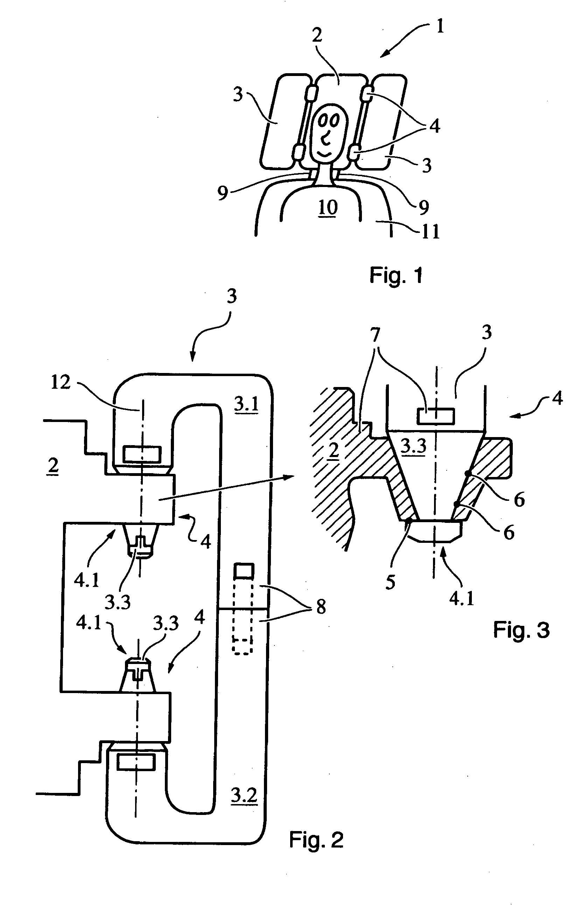

**Figur 1** zeigt die erfindungsgemäße Kopfstütze 1, die mittels Haltestangen 9 an der Rückenlehne 11 eines Fahrzeugsitzes vorgesehen ist. Der Fahrzeugsitz wird von einem Sitzinsassen 10 belegt. Die erfindungsgemäße Kopfstütze besteht aus einem Basiselement 2, an dem die Haltestangen 9 vorgesehen sind, mit denen das Basiselement an der Rückenlehne befestigt ist. Vorzugsweise ist die erfindungsgemäße Kopfstütze höhenverstellbar und/oder in ihrer Neigung vom Kopf des Sitzinsassen hin oder weg verstellbar vorgesehen. Erfindungsgemäß weist die Kopfstütze rechts und links vom Basiselement 2 jeweils ein Flügelelement 3 auf, das jeweils mittels jeweils zwei Scharnieren 4 an dem Basiselement 2 montiert ist. Die beiden Scharniere 4 stellen eine vertikale Achse 12 dar, um die das Flügelelement drehbar vorgesehen ist. Jedes Flügelelement kann in eine Vielzahl von Positionen eingestellt werden. Ganz besonders bevorzugt kann das Flügelelement auch in einer Stauposition verbracht werden, in der es sich im Wesentlichen parallel und an dem Basiselement 2 anliegend angeordnet ist. Vorzugsweise ist die Reibung in den Scharnieren 4 so hoch ausgebildet, dass sich die Flügelelemente 3 unter Anwendung von normalen Gebrauchskräften nicht selbsttätig verstellt, so dass eine einmal vom Benutzer gewählte Position der Flügelelemente bis zum nächsten Verstellvorgang erhalten bleibt.

**Figur 2** zeigt Details des Flügelelementes 3. Dieses Flügelelement 3 ist an zwei in einer Flucht liegenden Scharnieren 4 mit dem Basiselement 2 verbunden. Diese beiden Scharniere stellen eine Drehachse, insbesondere eine vertikale Drehachse, 12 dar. Die Tragstruktur jedes Flügelelementes besteht aus zwei Teilen 3.1, 3.2, die bei der Montage, insbesondere wenn der jeweilige Zapfen 3.3 eines Flügelelementteils 3.1, 3.2 in die Ausnehmung 4.1, 4.2 des Basiselementes 2 eingeführt wird, miteinander verbunden werden. Vorzugsweise wird dieser Verbund durch ein Sicherungsmittel 8, beispielsweise eine Schnappsicherung, gesichert.

**Figur 3** zeigt Details des Scharniers 4. Sowohl der Zapfen 3.3 als auch die Ausnehmung 4.1 sind zumindest abschnittsweise kegelstumpfförmig gestaltet, so dass der Zapfen 3.3 radial und in einer Raumrichtung axial geführt ist. Um zu verhindern, dass der Zapfen selbsttätig aus der Ausnehmung 4.1 herausrutscht, ist ein Axialanschlag 5 vorgesehen. Vorzugsweise handelt es sich hierbei um eine Schnappverbindung, die beim Einführen des Zapfens in die Ausnehmung zustande kommt. Vorzugsweise sind die Kegelstumpfflächen 6 so ausgebildet, dass eine hinreichend große Reibung zwischen dem Flügelelement und dem Basiselement entsteht. Um zu verhindern, dass das Flügelelement um einen bestimmten Winkel hinaus verstellt wird, weist die erfindungsgemäße Kopfstütze bevorzugt einen Radialanschlag 7, der sowohl an dem Kegelstumpf als auch an dem Basiselement vorgesehen ist, auf und der verhindert, dass das Flügelelement 3 über einen bestimmten Winkel hinaus verdreht wird.

### Bezugszeichenliste:

- 1: Kopfstütze
- 2: Basiselement
- 3: Flügelelement
- 3.1: erstes Teil des Flügelelementes
- 3.2: zweites Teil des Flügelelementes
- 3.3: Zapfen an dem Flügelelement, Zapfen für das Scharnier an dem Flügelelement
- 4: Scharnier
- 4.1: Bohrung des Scharniers, Ausnehmung für das Scharnier in dem Basiselement
- 5: Axialanschlag
- 6: Kegelstumpffläche
- 7: Radialanschlag
- 8: Sicherungsmittel, Schnappsicherung
- 9: Haltestange der Kopfstütze
- 10: Sitzinsasse
- 11: Rückenlehne
- 12: Drehachse, vertikale Drehachse

## Patentansprüche

1. Kopfstütze (1) mit einem Basiselement (2), an dem zwei Flügelelemente (3) mittels jeweils mindestens einem Scharnier (4) um eine vertikal vorgesehene Achse (12) drehbar gelagert sind, wobei das Scharnier einen Zapfen (3.3) und eine Ausnehmung (4.1) aufweist, **dadurch gekennzeichnet, dass** der Zapfen (3.3) und die Ausnehmung (4.1) kegelstumpfförmig vorgesehen sind, wobei der Zapfen (3.3) einen Axialanschlag (5) aufweist, der als Schnappverbindung vorgesehen ist, wobei eine Tragstruktur (3.1, 3.2) jedes Flügelelementes (3) zweiteilig vorgesehen ist und die zwei Teile der Tragstruktur (3.1, 3.2) zusammengesteckt sind.

2. Kopfstütze (1) nach Anspruch 1, **dadurch gekennzeichnet, dass** ein Radialanschlag (7) vorgesehen ist.

3. Kopfstütze (1) nach einem der voranstehenden Ansprüche , **dadurch gekennzeichnet, dass** zwischen den Teilen (3.1) der Tragstruktur ein Sicherungsmittel (8), insbesondere eine Schnappsicherung, vorgesehen ist.

4. Verfahren zur Montage eines Flügelelementes (3) einer Kopfstütze gemäß einem der voranstehenden Ansprüche, dessen Tragstruktur zweiteilig vorgesehen ist, an einem Basiselement (2), **dadurch gekennzeichnet, dass** die zwei Teile (3.1, 3.2) der Tragstruktur des Flügelelementes an dem Basiselement (2) montiert und dabei oder danach miteinander verbunden werden.

## Claims

1. Head restraint (1) having a main element (2) on which two wing elements (3) are fitted so as to be rotatable about a vertically provided axis (12) by means of in each case at least one hinge (4), wherein the hinge has a pin (3.3) and a recess (4.1), **characterized in that** the pin (3.3) and the recess (4.1) are provided in the form of a truncated cone, wherein the pin (3.3) has an axial stop (5) which is provided as a snap-action connection, wherein a support structure (3.1, 3.2) of each wing element (3) is provided in two parts and the two parts of the support structure (3.1, 3.2) are fitted together.

2. Head restraint (1) according to Claim 1, **characterized in that** a radial stop (7) is provided.

3. Head restraint (1) according to one of the preceding claims, **characterized in that** a securing means (8), in particular a snap-action securing means, is provided between the parts (3.1) of the support structure.

4. Method for fitting a wing element (3) of a headrest according to one of the preceding claims, which the support structure of which wing element is provided in two parts, on a main element (2), **characterized in that** the two parts (3.1, 3.2) of the support structure of the wing element are fitted on the main element (2) and are connected together in the process or thereafter.

## Revendications

1. Appui-tête (1) comprenant un élément de base (2) sur lequel deux éléments ailettes (3) sont montés de manière à pouvoir tourner autour d'un axe vertical (12) au moyen d'au moins une charnière (4) respective, la charnière comprenant un axe (3.3) et un évidement (4.1), **caractérisé en ce que** l'axe (3.3) et l'évidement (4.1) sont tronconiques, l'axe (3.3) comprenant une butée axiale (5) qui est prévue en tant que liaison par encliquetage, une structure de support (3.1, 3.2) de chaque élément ailette (3) étant prévue en deux parties et les deux parties de la structure de support (3.1, 3.2) étant assemblées.

2. Appui-tête (1) selon la revendication 1, **caractérisé en ce qu'**une butée radiale (7) est prévue.

3. Appui-tête (1) selon l'une quelconque des revendications précédentes, **caractérisé en ce qu'**un moyen de fixation (8), en particulier une fixation par encliquetage, est prévu entre les parties (3.1) de la structure de support.

4. Procédé de montage d'un élément ailette (3) d'un appui-tête selon l'une quelconque des revendications précédentes, dont la structure de support est prévue en deux parties, sur un élément de base (2), **caractérisé en ce que** les deux parties (3.1, 3.2) de la structure de support de l'élément ailette sont montées sur l'élément de base (2) et sont reliées l'une à l'autre à cette occasion ou ensuite.
